# EUROPEAN PATENT SPECIFICATION

(11) **EP 2 912 735 B1**
(45) Date of publication and mention of the grant of the patent: **31.01.2018**
(21) Application number: 13795296.6
(22) Date of filing: 23.10.2013
(51) Int. Cl.: H02B 1/21

(54) **BUSBAR ASSEMBLY**
SAMMELSCHIENENANORDNUNG
ENSEMBLE BARRE OMNIBUS

(30) Priority: 24.10.2012 AU 2012904679
(43) Date of publication of application: 02.09.2015
(73) Proprietor: Elsteel Denmark A/S, 2990 Nivå (DK)
(72) Inventor: LOGSTRUP, Erik, Katunayake 11420 (LK)
(86) International application number: PCT/IB2013/059565
(87) International publication number: WO 2014/064617

(56) References cited:
- DE-A1- 19 511 350
- US-A- 4 025 826

## Description

### TECHNICAL FIELD

The present invention relates to the field of electrical power distribution and control systems, in particular electrical switchgear assemblies or electrical panel boards.

### BACKGROUND ART

Electrical switchgear assemblies or electrical panel boards are widely used to distribute or to control the electrical power supply to the equipment and installations in the downstream. Generally, these switchgear assemblies or panel boards are compartmentalized based on the devices equipped in the compartments and the purpose for which they are used. These compartments are mainly identified as busbar compartments, cable compartments and device compartments. The busbar compartments are equipped with busbars in different sizes, different arrangements, i.e. vertically and horizontally, and of different current ratings, and their busbar holders. The main busbars are arranged horizontally at the top of the busbar compartment, while the dropper busbars are connected perpendicularly to the main busbars and run vertically downwards, closer to back of the device compartment. The cable compartments are often wired with cables that are connected to downstream equipment and installations whereas the device compartments house control devices and components such as circuit-breakers, switches, relays, etc ... which are either fixed in to the device compartment itself or fixed on to drawer-like units commonly known as withdrawable and removable units.

The devices and components in the withdrawable/removable units are internally wired to a set of terminals/contact pins extending out from the rear wall of the withdrawable/removable unit. When such a unit is inserted into its device compartment, the said contact pins plug-in to a plug-base or receptacle base suitably positioned in the housing structure or contact with dropper busbars to make electrical connection between the devices in the withdrawable/removable unit and the plug-base or the dropper busbars.

In conventional switchgear assemblies or panelboards, the compartments are separated by means of separation plates. Despite, the intermediary separation wall between the busbar compartment and the device compartment is kept fully opened or rectangular openings and cut-outs are kept in the separation plate depending on the requirements of the electrical connections between dropper busbars and withdrawable/removable units. The dropper busbar holders are mounted to the separation plate placed between the busbar compartment and the device compartment or to frame structure to hold the dropper busbars closer to the device compartment to facilitate electrical connections. Different types of plug-bases, for in-coming plugs or/and out-going plugs, are mounted inside the device compartment either on the surface facing the device compartment of the same plate separating the busbar compartment and the device compartment or on the frame structure of the switchgear assembly/panel board where a separation plate is not available.

The prior art discloses different mechanisms of holding busbars inside electrical switchgear assemblies using different configurations of busbar holders. Furthermore, the in-coming and out-going plug-bases mounted on to the front surface of the separation plate in the device compartment are also known in the prior art. The closest prior art related to the invention are found in D1: DE 195 11 350 A1 (KLOECKNER MOELLER GMBH [DE]) 2 October 1996 (1996-10-02) and D2: US 4025826 A (WILSON JOHN R ET AL) 24 May 1977 (1977-05-24). D1 discloses a low-voltage switch equipment for supplying and/or distributing electric power, with busbars fitted in a cubicle-like housing to which a switching device on a removable plug-in unit can be connected. Distribution bars are arranged in a bar channel system and secured by means of supports. D2 discloses a control center characterized by a metal enclosed upright cabinet having a plurality of vertical bus bars separately insulated and isolated from each other. The assembly of the busbar and insulation barriers are supported by a plurality of vertically spaced braces to prevent lateral movement of the bus bars as well as to hold the insulating barriers in tight surface-to-surface contact with the bus bars.

### TECHNICAL PROBLEM

Mainly due to the requirement of pre-determination of the positioning of in-coming/out-going plug-bases and dropper busbars to establish electrical connections between dropper busbars and withdrawable/removable units, the conventional electrical switchgear assemblies/panel boards lack adaptability to changes or upgrades made to circuit breakers, control circuits or withdrawable/removable units. Such changes or upgrades might require installation of additional dropper busbars or re-positioning of existing dropper busbars in the busbar compartment.

Furthermore, the above discussed type of arrangements in electrical switchgear assemblies require components such as dropper busbar holders, in-coming/out-going plug bases and brackets to be mounted on to either surfaces of the separation plate and a substantial amount of space is occupied by those apparatus in their respective compartments leaving limited space for repair and maintenance purposes.

In terms of safety concerns, either the intermediary wall between the busbar compartment and the device compartment is kept fully opened or the separation plate in between the two compartments has rectangular openings/out-outs which allows direct access to live busbars in the busbar compartment. Thus, the openings lead to accidental contact with live components and thereby increase the risk of getting hazardous electrical shocks, when the device compartment is opened or withdrawable/removable unit is removed out for maintenance purposes.

### SOLUTION TO PROBLEM

Having identified and gone through continuous research and development work, a multifunctional separation plate has been invented to address the technical shortcomings discussed under the "Technical Problem" in conventional electrical switchgear assemblies.

The present invention acts as a holder for dropper busbars, a plug-base and a compartment separation which enables incoming/outgoing plugs to be directly connected to dropper busbars without using any plug bases. The use of dropper busbar holders is avoided. The present invention provides fully adaptability and compatibility to the changes/upgrades made to withdrawable/removable units used in device compartment.

It is capable of separating the busbar compartment and the device compartment leaving no hazardous openings but facilitating fully electrical connectivity throughout the whole separation plate allowing the user maximum safety and minimum effort in maintenance .

### ADVANTAGEOUS EFFECTS

The present invention eliminates the use of three components, namely dropper busbar holders, in-coming plug bases and compartment separation, conventionally used in electric switchgear assemblies or panel boards. As a result of the integration of these three apparatus into a single embodiment, busbar compartments and device compartments become more spacious enabling technicians to carry-out maintenance and repair work conveniently and freely; the time and effort spent on fixing each of these apparatus is saved; the material usage for the production of those three apparatus is reduced.

### BRIEF DESCRIPTION OF DRAWINGS

An exemplary assembly of embodiments of the invention is shown in the following figures (Fig. 1 - 11).
Fig. 1 is a rear isometric view envisaging the invention in an electrical switchgear assembly/panel board.
Fig. 2 is an exploded isometric view of the invention.
Fig. 3 is a rear view showing the rear surfaces of the main embodiment and the auxiliary embodiment shown in Fig. 1.
Fig. 4 is a front view of the invention.
Fig. 5 is a front isometric view of the invention shown in Fig. 4.
Fig. 6 is a situation where withdrawable/removable units are plugged into the front surface of the main embodiment.
Fig. 7 shows the front view of the shutter plate assembly in its default position.
Fig. 8 is an isometric front view of the shutter plate assembly in its default position shown in Fig. 7.
Fig. 9 shows the front view of the shutter plate assembly in its opened position.
Fig.10 is an isometric front view of the shutter plate assembly in its opened position shown in Fig. 9.
Fig. 11 shows the clipping mechanism of two main embodiments.

### DETAILED DESCRIPTION OF THE INVENTION

The present invention is an assembly of two embodiments, i.e. the main embodiment (1) named as "Motherboard" and the auxiliary embodiment (50) named as "Supporting Holder", and a pair of mounting brackets named as "Mounting Rails" (5), collectively intended to be used in electrical switchgear assemblies or panel boards. The main embodiment (1) is a rigid insulated rectangular plate having a front surface (10) and a rear surface (30) with a substantial thickness. Moreover, it (1) is an integration of dropper busbar holders and in-coming/out-going plug-bases secured with a shutter plate assembly (20), into a separation plate that separates the busbar compartment and the device compartment, thus replaces the conventional dropper busbar holders, plug-bases and separation plates used in electrical switchgear assemblies or panel boards. The auxiliary embodiment (50) is a rigid insulated holder, having a longitudinal profile, which supports the main embodiment (1) to hold the dropper busbars (2) firmly and rigidly.

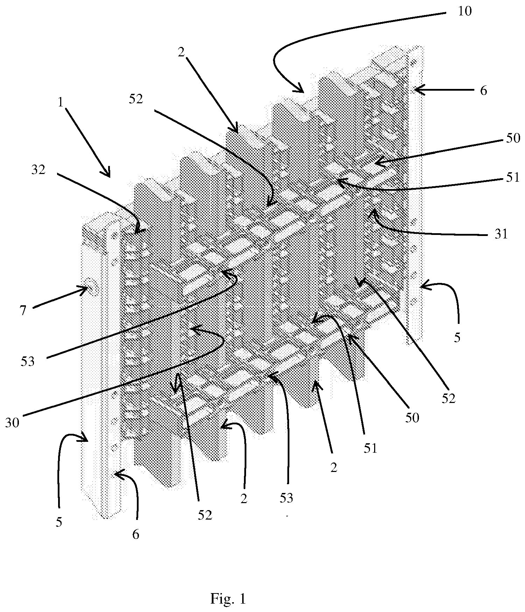

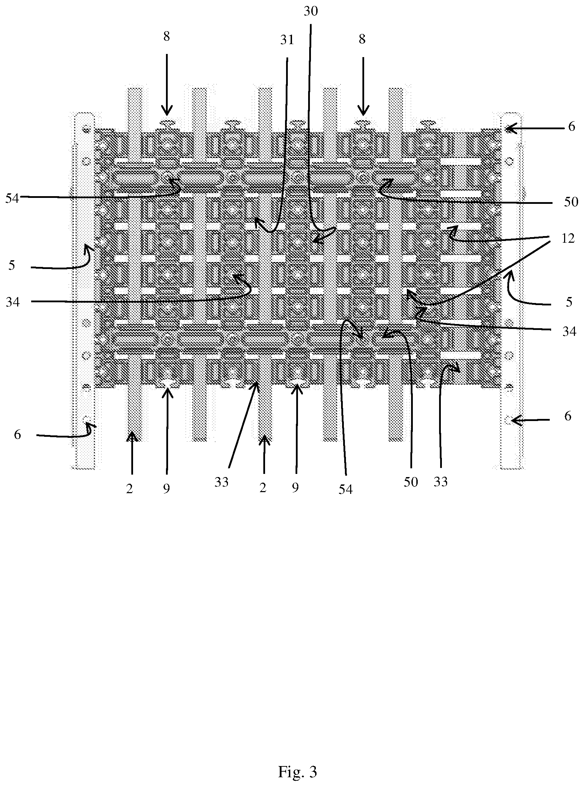

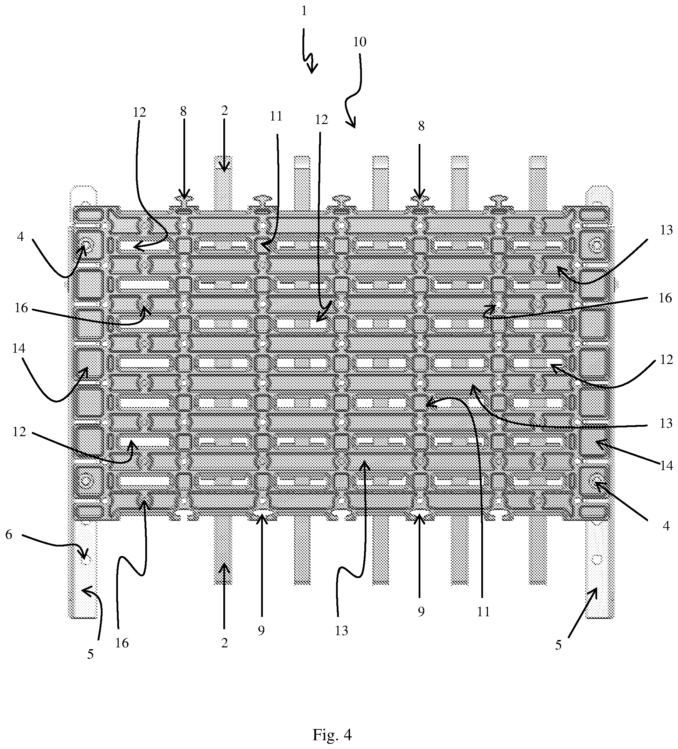

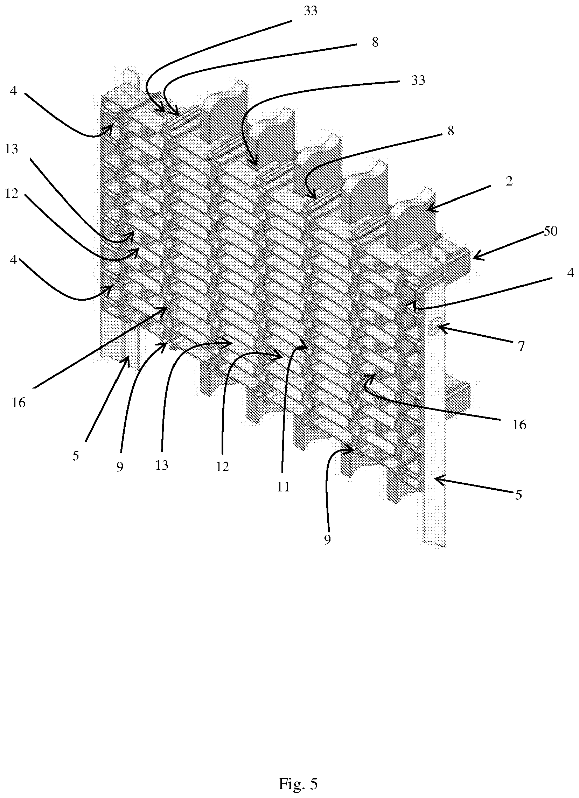

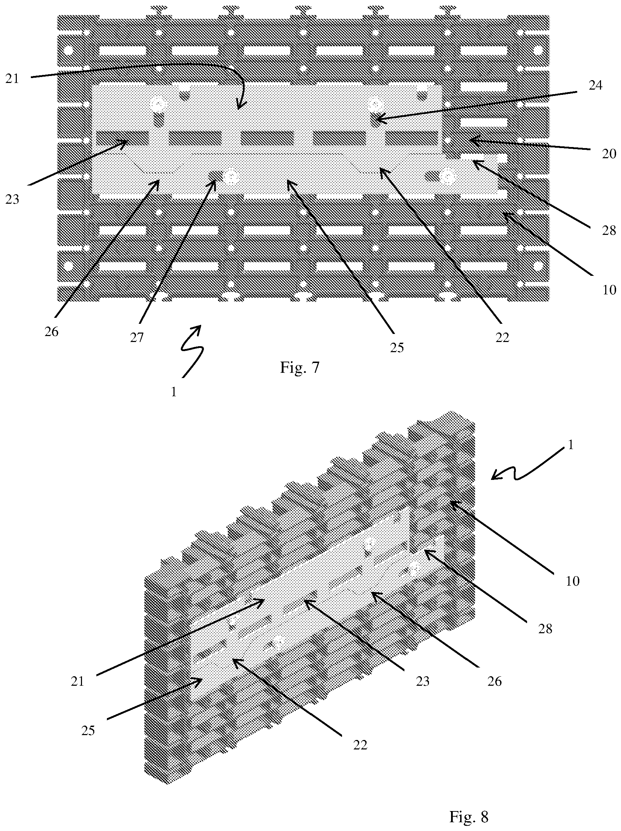

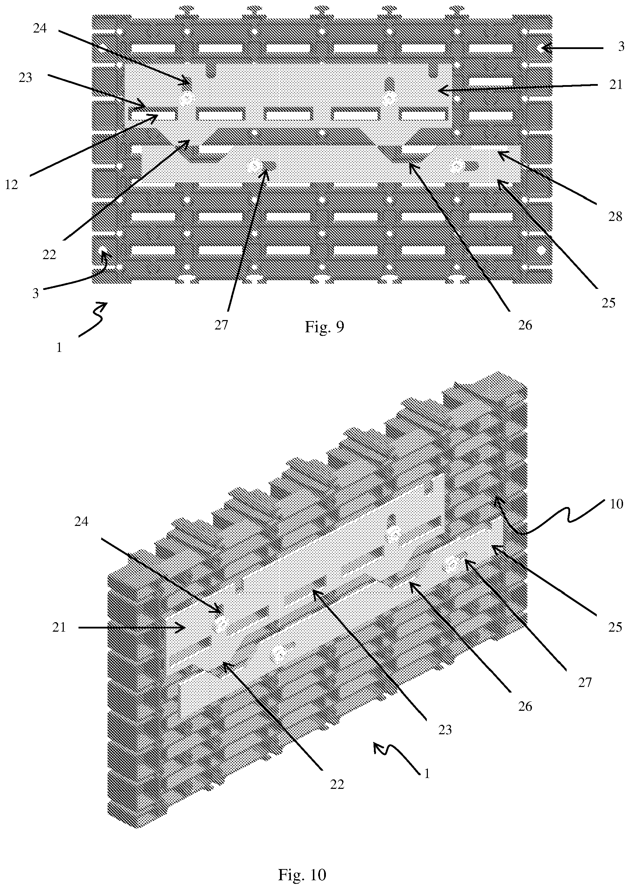

With reference to the embodiments shown in Fig. 1 to Fig. 9, the present invention is described below in detail.

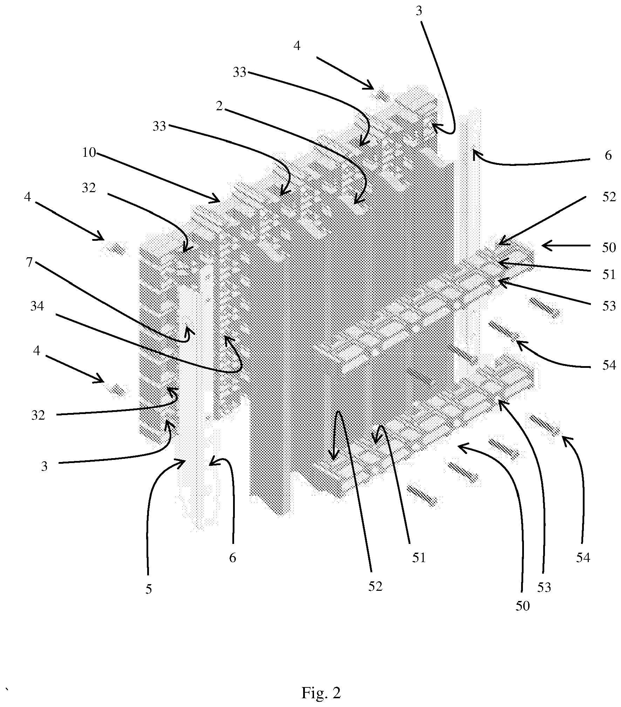

Fig.1 shows the complete invention with a dropper busbar (2) arrangement as it is envisaged in an electrical switchgear assembly or panel board. In combination with Fig.2, they illustrate two main functionalities of the invention, i.e. as a separation wall/plate between the busbar compartment and the device compartment and as a holder for dropper busbars (2) as close as possible to the device compartment. The main embodiment (1) is mounted to the frame structure of the electrical switchgear assembly/panel board with the help of the two mounting rails (5) which are first mounted to vertical frame members of the switchgear assembly/panel board that structurally separate the busbar compartment and the device compartment, using a set of screws inserted through the mounting rail screw holes (7), such that the mounting rails (5) run in parallel along the two vertical frame members. The mounting rails (5) comprise tapped holes (6) to receive the main embodiment (1) mounting screws (4). Subsequently, the main embodiment (1) is mounted to the said mounting rails (5) facing its front surface (10) towards the device compartment to receive in-coming/out-going plugs, using a set of screws (4) inserted through mounting screw holes (3) provided on the front surface (10) of the main embodiment (I), and received by the tapped holes (6) on the mounting rails (5). The mounting rails (5) may vary depending on the structural differences in the frame structure of the switchgear assembly/panel board. Basically the main embodiment (1) can be mounted to any form of a frame structure with the utilization of a suitable pair of brackets.

As shown in Fig.s 1-3, the rear surface (30) of the main embodiment (1) is configured to have a rib structure (31) comprising a series of parallel recessed vertical channels (33), an array of self-tapping screw receiving holes (34) and two tapered mounting edges (32) on its left and right vertical ends.

The series of parallel recessed vertical channels (33) are configured to be in equal distance to each other throughout the rear surface (30) of the main embodiment (1) and are meant to accommodate the dropper busbars (2). The depth of a recessed channel (33) is always kept lower than the height of a dropper busbar (2) in order to avoid dropper busbars (2) being fully sunk into the recessed channels (33); thus the dropper busbars (2) can only be partly inserted into the recessed channels (33) to enable them to be fasten to the main embodiment (I) by the auxiliary embodiment (50). On the other hand, the recessed channels (33) facilitate positioning of the dropper busbars (2) in the recessed channels (33) as close as possible to the device compartment to stab-in the dropper busbars (2) [through the plug-holes (12) on the front surface (10) of the main embodiment (1)] by contact pins of the plugs that extend out from withdrawable/removable units inserted into device compartment, in a minimum distance, while providing the required insulation in between the two compartments; thereby, the invention increases secure contact reachability through the compartment separation in a minimum distance. Furthermore, this configuration assures the switching of busbars (2) into any recessed channel (33) whenever a requirement arises.

An array of self-tapping screw receiving holes (34) is configured on the rear surface (30) of the main embodiment (1) to receive self-tapping screws (54) used to mount the auxiliary embodiment (50). The receiving holes (34) are positioned with equal distances in vertical columns and in horizontal rows throughout the rear surface (30) of the main embodiment (1), such that two adjacent columns of the receiving holes (34) lie middling with a recessed channel (33) except for the two recessed channels (33) close to the left and right vertical edges of the main embodiment (1). The receiving holes (34) are spreaded throughout the rear surface (30) of the main embodiment (1).

Further to Fig.s 1-3, the auxiliary embodiment (50) has rib structures (51) on the top and the bottom wider surfaces and rectangular dips (52) on one of the side surfaces and screw holes (53) on the opposing side surface. The auxiliary embodiment (50) acts as the fastening means of dropper busbars (2) to the vertical recessed channels (33) in the main embodiment (1). The dropper busbars (2) are fixed to the main embodiment (1) by first inserting them into the recessed channels (33) which results-in a portion of the dropper busbars (2) projecting out of the recessed channels (33). Secondly, the dropper busbars (2) are fastened by mounting the auxiliary embodiment (50), i.e. by inserting the rectangular dips (52) of the auxiliary embodiment (50) into the projected parts of the dropper busbars (2), with the use of self-tapping screws (54) inserted through the screw holes (53) on the auxiliary embodiment (50) and tightened into the receiving holes (34) on the rear surface (30) of the main embodiment (1).

The rectangular dips (52) in the auxiliary embodiment (50) have the same width of the recessed channels (33) and the distance between two adjacent dips (52) is equal to the distance between two adjacent recessed channels (33). The depth of a rectangular dip (52) of the auxiliary embodiment (50) is always lower than the height of the projected out portion of the dropper busbar (2). Thus, the former property ensures that when a dropper busbar (2) is inserted into a recessed channel (33), its projected out portion receives a rectangular dip (52) precisely, and the particular recessed channel (33) and the rectangular dip (52) are properly aligned. The latter property ensures that a considerable gap is maintained between the rear surface (30) of the main embodiment (1) and the auxiliary embodiment (50) in order to enable firm and rigid fastening of dropper busbar (2).

Since the recessed channels (33) and self-tapping screw receiving holes (34) are spread throughout the rear surface (30), the dropper busbar (2) arrangement can be easily changed even at a later stage depending on the requirements that arise due to the modifications made to the devices in the device compartment. Thus, the invention increases the high adaptability for changes in the device compartment, user-friendliness and easy maintenance. Due to dropper busbars (2) installed in an isolated manner, the opened area of each dropper busbar (2) is insulated by polycarbonate covers held in between auxiliary embodiments (50) to improve the protection from electrical shocks that may receive from the busbar compartment.

The tapered mounting edges (32) allow the main embodiment (1) to be flushed towards the busbar compartment in order to save more space in the device compartment as well as to perpendicularly and securely align dropper busbars (2) with the main busbars in the busbar compartment for convenient coupling purposes; it further allows the mounting rails (5) to grip the main embodiment (I) tightly.

As shown in Fig.s 4 & 6, the front surface (10) of the main embodiment (1) is configured to have a rib structure (11) comprising an array of internally angled plug-holes (12), an array of self-taping screw holes (16), a series of rectangular blind slots (13) and mounting screw holes (3) on the two vertical mounting edges (32).

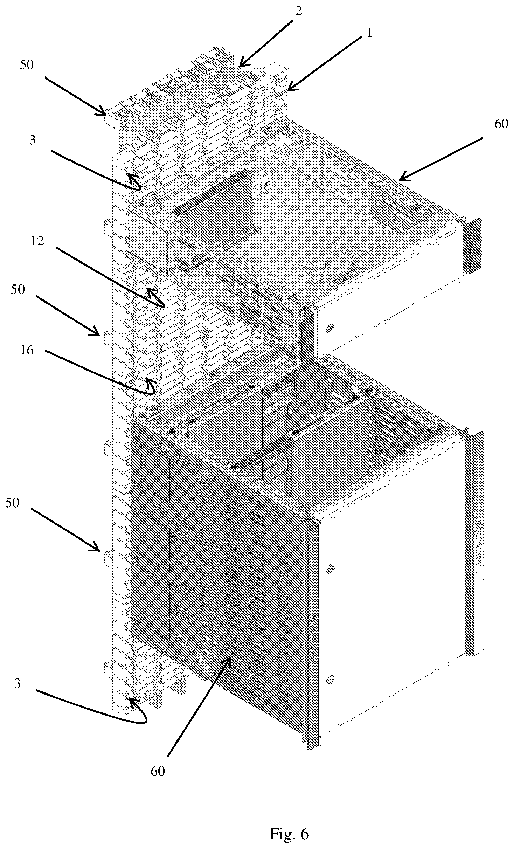

The plug-holes (12) on the front surface (10) are internally angled through-holes placed on the front surface (10) in a modularity of 25mm vertically and 50mm horizontally and in a manner which centers the dropper busbars (2) in the recessed channels (33). The plug-holes (12) are spread throughout the front surface (10) of the main embodiment (1) except at the two mounting edges (32) while each row of plug-holes (12) are middled with two rows of rectangular blind slots (13) to maintain the modularity. The plug-holes (12) allow contact pins of the plugs that extend out from the withdrawable/removable units, to be directly stabbed-in/plug-in to the dropper busbars (2) mounted vertically in the recessed channels (33) centered right at the back of each plug hole (12) while maintaining proper insulation between the device compartment and the busbar compartment. The internally angled wall structure of the plug-holes (12) guide the receiving plug pins to reach the centrally positioned dropper busbars (2) at the back of the plug-holes (12) in the recessed channels (33) to make the necessary electrical connections. Thus, the main embodiment (1) functions as a plug-base while providing the compartment separation. Due to the modularity of the plug-holes (12) spread throughout the front surface (10), the invention provides a plug base with total flexibility in positioning withdrawable/removable units as and when the requirements arise. The Fig. 6 illustrates a situation where withdrawable/removable units (60) are plugged into the front surface (10) of the main embodiment (I). In terms of safety, the plug-holes (12) are designed in a manner which improves the safety by avoiding the user getting contact with live components in the busbar compartment; the shape and the size of a plug-hole has brought down the level of penetration which prevents an accidental insertion of a human finger through a plug-hole (12).

The self-taping screw holes (16) are configured on the front surface (10) in equal vertical and horizontal distances to be in modular nature, except the two columns of self-taping screw holes (16) lying along the center of the columns of plug-holes (12) close to the left and right mounting edges (32). The self-taping screw holes (16) enable fixing of out-going plug bases depending on the requirements of the withdrawable/removable units. The modularity of the self-taping screw holes (16) arranged throughout the front surface (10) ensures the flexibility of positioning out-going plug bases corresponding to changes in withdrawable/removable units. The front surface (10) has four mounting holes (3) located on the mounting edges (32) close to four corners of the main embodiment (10). Although the rear surfaces of the two mounting edges (32) are tapered from rear surface (30), the front surfaces (14) of the two mounting edges (32) are at the same level of the front surface (10) of the main embodiment (I).

As shown in Fig.s 7-10, the shutter plate assembly (20) comprises two plates of which the upper-shutter plate (21) having rectangular cut-outs (23) of the size of plug-holes (12) and trapezoidal projections (22) and the lower-shutter plate (25) having trapezoidal dips (26) and a triggering-cut (28). In terms of functionally, the upper-shutter plate (21) covers the plug-holes (12) in its default position and moves upward to open the plug-holes (12) when a withdrawable unit is inserted. In terms of the structure, the height of the upper-shutter plate (21) is larger than the lower-shutter plate (25) whereas the length of the lower-shutter plate (25) is larger than the upper-shutter plate (21), thus the weight of the upper-shutter plate (21) has been increased. The upper-shutter plate (21) is mounted on to the front surface (10) of the main embodiment (1) covering the plug-holes (12) in default position and in a manner which allows it to slide vertically up and down through the vertical sliding slots (24). The lower-shutter plate (25) is mounted on to the front surface (10) of the main embodiment (1) in a manner which allows it to slide horizontally to left and right through the horizontal sliding slots (27). Due to the trapezoidal projections (22) and the trapezoidal dips (26) designed in the two shutter plates (21 & 25), the upper-shutter plate (21) slides upward when the lower-shutter plate (25) is slided to its right by a mechanism which pushes the triggering-cut (28) to its right. This triggering mechanism can be an object similar to a plug-pin extending out from a withdrawable/removable unit inserting into a plug-hole (12) simultaneously pushing the triggering-cut (28) to its right at the instance of the withdrawable/removable unit is being inserted and allowing the triggering-cut (28) to slidably move to its left, i.e. back to its default position, at the instance of releasing the withdrawable/removable unit from the plug-holes (12). Due to the weight of the upper-shutter plate (21) and the trapezoidal design of the two shutter plates, the upper-shutter plate (21) automatically slides downwards to its default position while slidably moving lower-shutter plate (25) to its default position, when the triggering-cut (28) is released (Refer FIG.s 9 & 10).

The provision of a shutter plate assembly (20) which further prevents the user receiving an electric shock by accidently inserting a tool or any other conductive object that can reach the live components in the busbar compartment, through plug-holes (12); thus, the level of penetration has brought further down to improve the safety of the users.

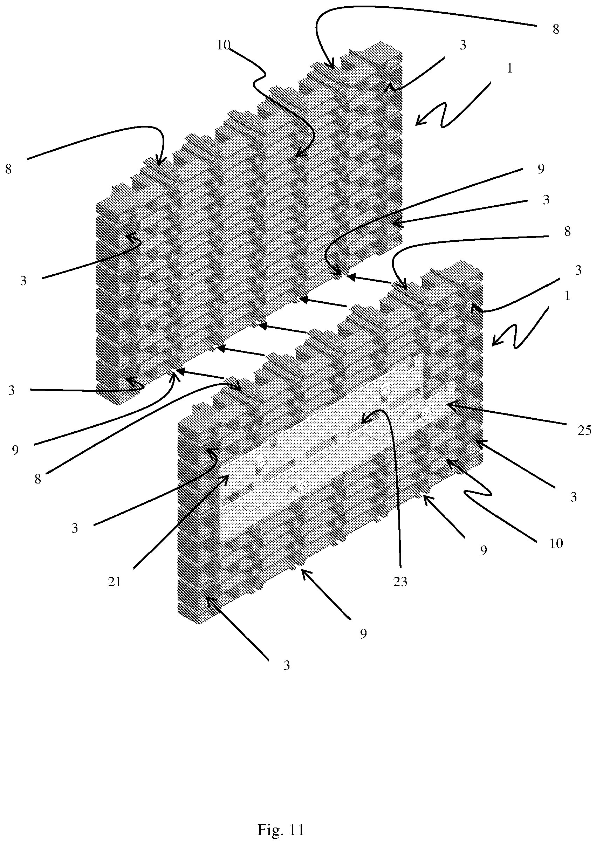

As shown in Fig.11, the main embodiment (1) comprises projected male clips (8) on its top horizontal edge and receptacle female clips (9) on its bottom horizontal edge. The projected male clips (8) are clipped with receptacle female clips (9) to extend the main embodiment (I) to any height according to the requirement of the frame structure. Thus, the clipping mechanism enhances extensionability of the invention.

## Claims

1. A switchgear assembly/panel board equipment as an insulated rigid assembly for the purpose of separating compartments, holding busbars and receiving plugs extended out from withdrawable/removable units, the insulated rigid assembly, comprising:
a. a main embodiment (1) which is a rigid insulated rectangular plate of a substantial thickness having a rib structure (11, 31), of which a front surface (10) comprising:
i. an array of internally angled plug-holes (12) to allow plugs extended out from withdrawable/removable units to plug-in to busbars mounted in the rear surface of (30) the main embodiment (1) ;
ii. an array of self-taping screw holes (16) to fix objects such as plug bases or shutter plates (20);
iii. a series of rectangular blind slots (13) and
iv. mounting screw holes (3) on two vertical mounting edges (32) to mount the main embodiment (1) to a frame structure of the switchgear assembly/panel board,
the rear surface (30) comprising:
v. a series of parallel recessed vertical channels (33) to accommodate busbars;
vi. an array of self-tapping screw receiving holes (34) to fix an auxiliary embodiment (50) and
vii. two tapered mounting edges (32) on its left and right vertical ends, and two horizontal edges, the top horizontal edge having a series of projected male clips (8) and the bottom horizontal edge having a series of receptacle female clips (9) to extend the main embodiment (1) to any height of the switchgear assembly/panel board;
b. an auxiliary embodiment (50) which is a rigid insulated holder having a longitudinal profile with a rib structure (51), of which one narrow side surface comprising rectangular dips (52) in regular intervals and the opposing side comprising screw holes (53) for self-tapping screws (54) collectively meant for fastening busbars to the main embodiment (1) ;
c. an assembly of shutter plates (20) of which the upper shutter plate (21) comprising: trapezoidal projections (22); rectangular cut-outs (23) and vertical sliding slots (24) and the lower shutter plate (25) comprising: trapezoidal dips (26); a triggering-cut (28) and horizontal sliding slots (27) to control access to busbars mounted in the rear surface (30) of the main embodiment (1) and
d. pair of 'L' shaped mounting rails (5) comprising tapped through holes (6) one surface and free holes (7) on the other surface to fix the main embodiment (1) to the frame structure of the switchgear assembly/panel board.

2. In accordance with claim 1, the switchgear assembly/panel board **characterized in that** the main embodiment (1) separates the busbar compartment and the device compartment of the switchgear assembly/panel board.

3. In accordance with claim 1, the switchgear assembly/panel board **characterized in that** the main embodiment (1) holds busbars (2) in recessed channels (33) as close as possible to the device compartment.

4. In accordance with claim 1, the switchgear assembly/panel board **characterized in that** a plurality of recessed channels (33) are positioned vertically parallel in equal distance to each other on the rear surface (30) of the main embodiment (1) and the depth of a recessed channel (33) is lower than the height of the busbar (2) inserted into the recessed channel (33).

5. In accordance with claim 4, the switchgear assembly/panel board **characterized in that** the plurality of recessed channels (33) spread throughout the rear surface (30) of the main embodiment (1) facilitates the switching of busbars (2) from one recessed channel (33) to another.

6. In accordance with claim 1, the switchgear assembly/panel board **characterized in that** the main embodiment (1) has at least four mounting screw holes (3) located on the mounting edges (32) close to four corners of the main embodiment (1).

7. In accordance with claim 1, the switchgear assembly/panel board **characterized in that** the 'L' shaped mounting rails (5) has a plurality of tapped holes (6) on one side to receive mounting screws of the main embodiment (1) and a plurality of free holes (7) on the other side to fix the mounting rails to vertical frame members of the switchgear assembly/panel board.

8. In accordance with claim 1, the switchgear assembly/panel board **characterized in that** the rear surface (30) of the main embodiment (1) is tapered at the two vertical mounting edges (32) to have two different levels at the mounting edges (32) while the front surfaces (14) of the two mounting edges are at the same level of the front surface (10) of the main embodiment (1).

9. In accordance with claim 1, the switchgear assembly/panel board **characterized in that** a plurality of self-tapping screw receiving holes (34) are positioned in equal distances in vertical columns and horizontal rows throughout the rear surface (30) of the main embodiment (1), such that two adjacent columns of the receiving holes (34) lie middling with a recessed channel (33) except for the two recessed channels (33) close to the left and right vertical edges of the main embodiment (1).

10. In accordance with claim 1, the switchgear assembly/panel board **characterized in that** the opened area of each busbar (2) installed in the recessed channels (33) are isolated by individually insulating them with polycarbonate covers held in between auxiliary embodiments (50).

11. In accordance with claim 1, the switchgear assembly/panel board **characterized in that** the front surface (10) of the main embodiment (1) is a configuration of an array of internally angled plug-holes (12), an array of self-taping screw holes (16), a series of rectangular blind slots (13) and mounting screw holes (3).

12. In accordance with claim 1, the switchgear assembly/panel board **characterized in that** a plurality of internally angled plug-holes (12) are positioned on the front surface (10) with a modularity of 25mm vertically and 50mm horizontally and centering the recessed channels (33) on the rear surface (30) of the embodiment (1).

13. In accordance with claim 1, the switchgear assembly/panel board **characterized in that** the internally angled plug-holes (12) are spreaded throughout the front surface (10) of the main embodiment (1) except at the two mounting edges (32).

14. In accordance with claim 1, the switchgear assembly/panel board **characterized in that** the plug-holes (12) have an internally angled wall structure in order to guide the receiving plug pins to reach the centrally positioned dropper busbars (2) at the back of the plug-holes (12) in the recessed channels (33).

15. In accordance with claim 1, the switchgear assembly/panel board **characterized in that** the size and the shape of a plug-hole (12) are determined in a manner which prevents the insertion of an object of a size of a human finger.

16. In accordance with claim 1, the switchgear assembly/panel board **characterized in that** the self-taping screw holes (16) are configured on the front surface (10) in equal vertical and horizontal distances to be in modular nature, except the two columns of self-taping screw holes (16) lying along the center of the columns of plug-holes (12) close to the left and right mounting edges (32).

17. In accordance with claim 1, the switchgear assembly/panel board **characterized in that** the main embodiment (1) is facilitated with a shutter plate assembly (20) comprising two plates of which the upper-shutter plate (21) is having rectangular cut-outs (23) of the size of plug-holes (12), trapezoidal projections (22) and vertical sliding slots (24) whereas the lower-shutter plate (25) is having trapezoidal dips (26), a triggering-cut (28) and horizontal sliding slots (27).

18. In accordance with claim 17, the switchgear assembly/panel board **characterized in that** the shutter plate assembly (20) of which the upper-shutter plate (21) covers the plug-holes (12) of the main embodiment (1) in its default position; moves upward opening the plug-holes (12) when a withdrawable/removable unit is inserted and drops downwards closing the plug-holes (12) when the withdrawable/removable unit is removed.

19. In accordance with claim 18, the switchgear assembly/panel board **characterized in that** the shutter plate assembly (20) of which the height of the upper-shutter plate (21) is larger than the lower-shutter plate (25) whereas the length of the lower-shutter plate (25) is larger than the upper-shutter plate (21), thus the weight of the upper-shutter plate (21) has been increased.

20. In accordance with claim 17, the switchgear assembly/panel board **characterized in that** the shutter plate assembly (20) of which the upper-shutter plate (21) is mounted on to the front surface (10) of the main embodiment (1) covering the plug-holes (12) in default position and in a manner which allows it to slide vertically up and down through the vertical sliding slots (24).

21. In accordance with claim 17, the switchgear assembly/panel board **characterized in that** the shutter plate assembly (20) of which the lower-shutter plate (25) is mounted on to the front surface (10) of the main embodiment (1) in a manner which allows it to slide horizontally to left and right through the horizontal sliding slots (27).

22. In accordance with claim 1, the switchgear assembly/panel board **characterized in that** the main embodiment (1) comprises a plurality of projected male clips (8) on its top horizontal edge and a plurality of female receptacle clips (9) on its bottom horizontal edge.

23. In accordance with claim 1, the switchgear assembly/panel board **characterized in that** the auxiliary embodiment (50) has rib structures (51) on its wider rectangular surfaces, rectangular dips (52) in regular intervals on one of the narrow surfaces and a series of screw holes (53) on the other opposing narrow surface, such that the auxiliary embodiment (50) fastens busbars inserted in recessed channels (33) by tightening the self-tapping screws (54) into self-taping screw receiving holes (34) on the rear surface (30) of the main embodiment (1), inserted through the said screw holes (53) on the auxiliary embodiment (50).

24. In accordance with claim 23, the switchgear assembly/panel board **characterized in that** the rectangular dips (52) in the auxiliary embodiment (50) have the same width of the recessed channels (33) and the distance between two adjacent dips (52) is equal to the distance between two adjacent recessed channels (33).

25. In accordance with claim 24, the switchgear assembly/panel board **characterized in that** the depth of a rectangular dip (52) of the auxiliary embodiment (50) is lower than the height of the projected out portion of the busbar installed in the recessed channels (33).

26. A method to cover and uncover plug-holes (12) of the main embodiment (1) of the switchgear assembly/panel board, as defined in Claim 1, comprising the steps of:
a. The upper-shutter plate (21) covers the plug-holes (12) in its default position;
b. The upper-shutter plate (21) is mounted covering the plug-holes (12) in default position and in a manner which allows it to slide vertically up and down through the vertical sliding slots (24);
c. The lower-shutter plate (25) is mounted in a manner which allows it to slide horizontally to left and right through the horizontal sliding slots (27);
d. The lower-shutter plate (25) is slidably moved towards its right by inserting an object through the triggering-cut (28) which pushes the triggering-cut (28) to its right thereby the upper-shutter plate (21) slidably moves upward and opens the plug-holes (12);
e. When the object that pushes the triggering-cut (28) towards right, is being withdrawn from the triggering-cut (28), the upper-shutter plate (21) starts to move downwards simultaneously moving the lower-shutter plate (25) towards its left, i.e. back to its default position closing the plug-holes (12) and
f. When the object that pushes the triggering-cut (28) towards right, is fully released from the triggering-cut (28), the upper-shutter plate (21) automatically reaches back to its default position and the plug-holes (12) are completely closed.

## Patentansprüche

1. Vorrichtung für Schaltanlagen/Schalttafeln als isolierte starre Anordnung zum Trennen von Abteilen, Halten von Sammelschienen und Aufnahmesteckern, eine Hauptausführungsform (1), die eine starre, isolierte rechteckige Platte mit einer wesentlichen Dicke mit einer Rippenstruktur (11, 31) ist, von der eine Vorderfläche (10) aufweist:
i. eine Anordnung von innen abgewinkelten Stecklöchern (12), um zu ermöglichen, daß sich die Stöpsel aus den herausziehbaren / entfernbaren Einheiten herausziehen, um in die hintere Oberfläche von (30) der Hauptausführungsform (1);
ii. eine Anordnung von selbstschneidendes Schraubenloch (16), um Gegenstände wie Steckerbasen oder Verschlußplatten (20) zu befestigen;
iii. eine Reihe von rechteckigen Blindschlitzen (13) und
iv. befestigungsschraubenlöcher (3) an zwei senkrechten Montagekanten (32) zur Befestigung der Hauptausführungsform (1) an einer Rahmenkonstruktion der Schaltanlage / Schalttafel montieren,
wobei die Rückfläche (30) aufweist:
v. eine Reihe von parallel vertieften vertikalen Kanälen (33) zur Aufnahme von Sammelschienen;
vi. eine Anordnung von selbstschneidenden Schraubenaufnahmelöchern (34), um eine Hilfsausführungsform (50) und
vii. zwei verjüngte Befestigungskanten (32) an ihren linken und rechten vertikalen Enden und zwei horizontalen Kanten, wobei die obere horizontale Kante eine Reihe von vorstehenden männlichen Klammern (8) und die untere horizontale Kante mit einer Reihe von Buchsen-Klammern (9) bis erweitern die Hauptausführungsform (1) auf jede beliebige Höhe der Schaltanlage /Tafel;
b. eine Hilfsausführungsform (50), die ein starrer isolierter Halter mit einem Längsprofil mit einer Rippenstruktur (51) ist, von denen eine schmale Seitenfläche in regelmäßigen Abständen rechteckige Dips (52) aufweist und die gegenüberliegende Seite Schraubenlöcher (53) aufweist selbstschneidende Schrauben (54), die zusammen zur Befestigung von Sammelschienen an der Hauptausführungsform (1) vorgesehen sind;
c. eine Anordnung von Verschlußplatten (20), deren obere Verschlußplatte (21) aufweist: trapezförmige Vorsprünge (22); rechteckige Ausschnitte (23) und vertikale Gleitschlitze (24) und die untere Verschlußplatte (25) mit: trapezförmigen Dips (26); einen Auslöseschneid (28) und horizontale Gleitschlitze (27) zum Steuern des Zugangs zu in der Rückfläche (30) der Hauptausführungsform (1) und
d. paar von L-förmigen Montageschienen (5) mit Gewindebohrungen (6) eine Oberfläche und freie Löcher (7) auf der anderen Oberfläche, um die Hauptausführungsform (1) an der Rahmenstruktur der Schaltanlage / Plattenplatte zu befestigen.

2. Gemäß Anspruch 1 ist die Schaltanlage / Schalttafel **dadurch gekennzeichnet, dass** die Hauptausführungsform (1) den Sammelschienenraum und den Geräteabteil der Schaltanlage / Schalttafel trennt.

3. Verfahren nach Anspruch 1, **dadurch gekennzeichnet, dass** die Hauptbaugruppe / Baugruppe **dadurch gekennzeichnet ist, dass** die Hauptausführungsform (1) in senkrechten Kanälen (33) so nahe wie möglich an dem Gerätefach liegt.

4. Verfahren nach einem der Ansprüche 1 bis 4, **dadurch gekennzeichnet, dass** eine Vielzahl von vertieften Kanälen (33) in gleichem Abstand zueinander auf der Rückfläche (30) der Hauptausführungsform (1) und / ist die Tiefe eines vertieften Kanals (33) niedriger als die Höhe der in den vertieften Kanal (33) eingesetzten Sammelschiene (2).

5. Vorrichtung nach Anspruch 4, **dadurch gekennzeichnet, dass** die Mehrzahl von vertieften Kanälen (33), die sich über die gesamte Rückfläche (30) der Hauptausführungsform (1) verteilen, das Umschalten von Sammelschienen (2) von einem ermöglicht vertieften Kanal (33) zum anderen.

6. Vorrichtung nach Anspruch 1, **dadurch gekennzeichnet, dass** die Hauptanordnung (1) mindestens vier Befestigungsschraubenlöcher (3) aufweist, die an den Befestigungskanten (32) nahe an vier Ecken der Hauptausführungsform (1).

7. Verfahren nach einem der Ansprüche 1 bis 4, **dadurch gekennzeichnet, dass** die "L" -förmigen Montageschienen (5) auf der einen Seite eine Vielzahl von Gewindebohrungen (6) aufweisen, um Befestigungsschrauben der Hauptausführungsform (1) aufzunehmen, und eine Vielzahl von freien Löchern (7) auf der anderen Seite, um die Montageschienen an senkrechten Rahmenelementen der Schaltanlage / Plattenplatte zu befestigen.

8. Vorrichtung nach Anspruch 1, **dadurch gekennzeichnet, daß** die hintere Fläche (30) der Hauptausführungsform (1) an den beiden vertikalen Befestigungskanten (32) verjüngt ist, um an den Befestigungskanten zwei unterschiedliche Ebenen zu haben (32), während die vorderen Flächen (14) der beiden Befestigungskanten auf der gleichen Höhe der vorderen Fläche (10) der Hauptausführungsform (1) liegen.

9. Verfahren nach einem der Ansprüche 1 bis 9, **dadurch gekennzeichnet, dass** eine Mehrzahl von selbstschneidenden Schraubenaufnahmebohrungen (34) in gleichen Abständen in vertikalen Säulen und horizontalen Reihen über die gesamte rückseitige Oberfläche (30) des Hauptteils angeordnet ist (1), so dass zwei benachbarte Säulen der Aufnahmelöcher (34) mit einem vertieften Kanal (33) mit Ausnahme der beiden vertieften Kanäle (33) nahe den linken und rechten vertikalen Kanten der Hauptausführungsform (1) liegen, .

10. Verfahren nach einem der Ansprüche 1 bis 9, **dadurch gekennzeichnet, dass** die in den vertieften Kanälen (33) installierte, geöffnete Fläche jeder Sammelschiene (2) durch einzeln isolierende Polycarbonatabdeckungen zwischen den Hilfsausführungen (50)).

11. Vorrichtung nach Anspruch 1, **dadurch gekennzeichnet, daß** die vordere Oberfläche (10) der Hauptausführungsform (1) eine Anordnung aus einer Anordnung von innen abgewinkelten Stopfenlöchern (12), einer Anordnung von selbstschneidenden Schraubenlöchern (16) von rechteckigen Blindschlitzen (13) und Befestigungsschraubenlöchern (3).

12. Verfahren nach einem der Ansprüche 1 bis 12, **dadurch gekennzeichnet, dass** an der Vorderseite (10) eine Vielzahl von innengewinkelten Stecklöchern (12) mit einer Modularität von 25 mm vertikal und 50 mm horizontal angeordnet ist und die vertiefte Zentrierung zentriert ist Kanäle (33) auf der Rückfläche (30) der Ausführungsform (1).

13. Verfahren nach einem der Ansprüche 1 bis 13, **dadurch gekennzeichnet, dass** die innenseitig abgewinkelten Stecklöcher (12) über die gesamte Vorderseite (10) der Hauptausführungsform (1) verteilt sind, mit Ausnahme der beiden Befestigungskanten (32).

14. Verfahren nach einem der Ansprüche 1 bis 13, **dadurch gekennzeichnet, dass** die Stecklöcher (12) eine innengewinkelte Wandstruktur aufweisen, um die aufnehmenden Steckerstifte zu führen, um die zentral positionierten Tropfensammelschienen (2) an der Rückseite der Stecklöcher (12) in den vertieften Kanälen (33).

15. Vorrichtung nach Anspruch 1, **dadurch gekennzeichnet, dass** die Größe und die Form eines Stecklochs (12) in einer Weise bestimmt sind, die das Einsetzen eines Objekts mit einer Größe eines menschlichen Fingers verhindert.

16. Vorrichtung nach Anspruch 1, **dadurch gekennzeichnet, daß** die selbstschneidendes Schraubenloch (16) auf der Vorderfläche (10) in gleichen vertikalen und horizontalen Abständen angeordnet sind, um modular zu sein, mit Ausnahme der beiden Spalten von selbstschneidendes Schraubenloch (16), die entlang der Mitte der Säulen von Stecklöchern (12) nahe der linken und rechten Montagekanten (32) liegen.

17. Vorrichtung nach Anspruch 1, **dadurch gekennzeichnet, daß** die Hauptanordnung (1) mit einer Verschlußplattenanordnung (20) versehen ist, die zwei Platten aufweist, deren obere Verschlußplatte (21) einen rechteckigen Schnitt aufweist (23) der Größe von Stecklöchern (12), trapezförmigen Vorsprüngen (22) und vertikalen Gleitschlitzen (24), während die untere Verschlußplatte (25) trapezförmige Dips (26), einen Auslöseschnitt (28) und horizontalen Gleitschlitzen (27).

18. Vorrichtung nach Anspruch 17, **dadurch gekennzeichnet, daß** die Verschlußplattenanordnung (20), von der die obere Verschlußplatte (21) die Einstecklöcher (12) der Hauptausführungsform (1) in seine Standardposition; wenn die herausziehbare/ herausnehmbare Einheit eingeführt wird und die Verschlusslöcher (12) nach unten abschließt, wenn die entfernbare / entfernbare Einheit entfernt wird, nach oben bewegt wird.

19. Vorrichtung nach Anspruch 18, **dadurch gekennzeichnet, daß** die Verschlußplattenanordnung (20), deren Höhe die obere Verschlußplatte (21) größer ist als die untere Verschlußplatte (25), während die Verschlußplatte die Länge der unteren Verschlußplatte (25) größer ist als die obere Verschlußplatte (21), wodurch das Gewicht der oberen Verschlußplatte (21) erhöht wurde.

20. Vorrichtung nach Anspruch 17, **dadurch gekennzeichnet, daß** die Verschlußplattenanordnung (20), an der die obere Verschlußplatte (21) an der vorderen Oberfläche (10) der Hauptausführungsform (1) befestigt ist, die Stecklöcher (12) in der Standardposition und in einer Weise, die es erlaubt, vertikal durch die vertikalen Gleitschlitze (24) nach oben und unten zu gleiten.

21. Vorrichtung nach Anspruch 17, **dadurch gekennzeichnet, daß** die Schalttafelanordnung (20), an der die untere Verschlußplatte (25) an der vorderen Fläche (10) der Hauptausführungsform (1) angebracht ist,) in einer Weise, die es ermöglicht, horizontal nach links und nach rechts durch die horizontalen Gleitschlitze (27) zu gleiten.

22. Vorrichtung nach Anspruch 1, **dadurch gekennzeichnet, daß** die Hauptanordnung (1) eine Vielzahl von vorspringenden Klammern (8) an ihrer oberen horizontalen Kante und eine Vielzahl von weiblichen Aufnahmeklammern (9) aufweist untere horizontale Kante.

23. Vorrichtung nach Anspruch 1, **dadurch gekennzeichnet, dass** die Hilfsausführung (50) an ihren breiteren rechteckigen Flächen Rippenstrukturen (51), in regelmäßigen Abständen rechteckige Vertiefungen (52) an einer der schmalen Flächen und eine Reihe von Schraubenlöchern (53) an der anderen gegenüberliegenden schmalen Oberfläche, so dass die Hilfsausführung (50) in vertieften Kanälen (33) eingesetzte Sammelschienen durch Anziehen der selbstschneidenden Schrauben (54) in selbstschneidende Schraubenaufnahmelöcher 34) an der hinteren Oberfläche (30) der Hauptausführungsform (1), die durch die Schraubenlöcher (53) an der Hilfsausführungsform (50) eingeführt ist.

24. Vorrichtung nach Anspruch 23, **dadurch gekennzeichnet, dass** die rechteckigen Dips (52) in der Hilfsausführungsform (50) die gleiche Breite der vertieften Kanäle (33) und der Abstand zwischen zwei benachbarten Dips (52) aufweisen) gleich dem Abstand zwischen zwei benachbarten vertieften Kanälen (33) ist.

25. Vorrichtung nach Anspruch 24, **dadurch gekennzeichnet, dass** die Schaltanlage / Plattenplatte **dadurch gekennzeichnet, daß** die Tiefe eines rechteckigen Tauchs (52) des Hilfsausführungsbeispiels (50) niedriger ist als die Höhe des vorstehenden Teils der in der Vertiefung installierten Sammelschiene Kanäle (33).

26. Verfahren zum Abdecken und Aufdecken von Stecklöchern (12) der Hauptausführungsform (1) der Schaltanlage / Plattenplatte nach Anspruch 1, mit den Schritten:
a. Die obere Verschlußplatte (21) bedeckt die Stecklöcher (12) in ihrer Voreinstellung;
b. Die obere Verschlußplatte (21) ist in Ablage der Stecklöcher (12) in Default-Position und in einer Weise angeordnet, die es ermöglicht, durch die vertikalen Gleitschlitze (24) vertikal nach oben und nach unten zu gleiten;
c. Die untere Verschlußplatte (25) ist in einer Weise montiert, die es ermöglicht, horizontal nach links und nach rechts durch die horizontalen Gleitschlitze (27) zu gleiten;
d. Die untere Verschlußplatte (25) wird nach rechts verschoben, indem ein Gegenstand durch den Auslöseschneid (28) eingeführt wird, der den Auslöseschneider (28) nach rechts drückt, wodurch sich die obere Verschlußplatte (21) gleitend nach oben bewegt und öffnet die Stecklöcher (12);
e. Wenn das Objekt, das den Auslöseschneid (28) nach rechts drückt, aus dem Auslöseschneid (28) herausgezogen wird, beginnt die obere Verschlußplatte (21) nach unten zu bewegen, um gleichzeitig die untere Verschlußplatte (25) zu bewegen seine linke, dh zurück zu ihrer Voreinstellung, die die Stecklöcher (12) und
f. Wenn das Objekt, das den Auslöseschneider (28) nach rechts drückt, vollständig aus dem Auslöseschneid (28) herausgezogen wird, gelangt die obere Verschlußplatte (21) automatisch in ihre Voreinstellung zurück und die Stecklöcher (12) sind vollständig geschlossen.

## Revendications

1. Ensemble d'appareillage de commutation / tableau de distribution en tant qu'ensemble rigide isolé destiné à séparer des compartiments, des barres de maintien et des fiches de réception s'étendant à partir d'unités débrochables / amovibles, l'ensemble rigide isolé comprenant:
a. un mode de réalisation principal (1) qui est une plaque rectangulaire isolée rigide d'une épaisseur substantielle ayant une structure nervurée (11,31), dont une surface avant (10) comprenant:
i. un ensemble de trous d'enfichage (12) à angle interne pour permettre aux fiches sortant d'unités débrochables / amovibles de se brancher sur des barres de bus montées dans la surface arrière du (30) mode de réalisation principal (1);
ii. une série de trous de vis autotaraudants (16) pour fixer des objets tels que des bases de fiches ou des plaques de volet (20);
iii. une série de fentes aveugles rectangulaires (13) et
iv. monter des trous de vis (3) sur deux bords de montage verticaux (32) pour monter le mode de réalisation principal (1) sur une structure de cadre de l'ensemble d'appareillage / panneau de panneau,
la surface arrière (30) comprenant:
v. une série de canaux verticaux évidés parallèles (33) pour recevoir des barres omnibus;
vi. un réseau de trous de réception de vis autotaraudeuses (34) pour fixer un mode de réalisation auxiliaire (50) et
vii. deux bords de montage coniques (32) à ses extrémités verticales gauche et droite et deux bords horizontaux, le bord supérieur horizontal comportant une série de clips mâles (8) en saillie et le bord horizontal inférieur ayant une série de clips femelles étendre le mode de réalisation principal (1) à n'importe quelle hauteur de l'ensemble d'appareillage / panneau de panneau;
b. une forme de réalisation auxiliaire (50) qui est un support rigide isolé ayant un profil longitudinal avec une structure nervurée (51), dont une surface latérale étroite comprenant des creux rectangulaires (52) à intervalles réguliers et le côté opposé comprenant des trous de vis des vis auto-taraudeuses (54) collectivement destinées à fixer des barres de bus au mode de réalisation principal (1);
c. un ensemble de plaques d'obturation (20) dont la plaque d'obturation supérieure (21) comprend: des saillies trapézoïdales (22); des évidements rectangulaires (23) et des fentes de coulissement verticales (24) et la plaque d'obturation inférieure (25) comprenant: des creux trapézoïdaux (26); une fente de déclenchement (28) et une fente de coulissement horizontale (27) pour commander l'accès aux barres conductrices montées dans la surface arrière (30) du mode de réalisation principal (1) et
d. des rails de montage en forme de L (5) comprenant des trous traversants taraudés (6), une surface et des trous libres (7) sur l'autre surface pour fixer le mode de réalisation principal (1) à la structure de cadre de l'ensemble d'appareillage.

2. Selon la revendication 1, l'ensemble d'appareillage / panneau de distribution **caractérisé en ce que** le mode de réalisation principal (1) sépare le compartiment de jeu de barres et le compartiment de dispositif de l'ensemble d'appareillage / panneau de panneau.

3. Selon la revendication 1, l'ensemble d'appareillage / panneau de distribution **caractérisé en ce que** le mode de réalisation principal (1) contient des barres omnibus (2) dans des canaux évidés (33) aussi près que possible du compartiment de dispositif.

4. Selon la revendication 1, l'ensemble d'appareillage / panneau de panneau **caractérisé en ce qu'**une pluralité de canaux évidés (33) sont positionnés verticalement parallèlement l'un à l'autre sur la surface arrière (30) du mode de réalisation principal (1) et la profondeur d'un canal en creux (33) est inférieure à la hauteur du jeu de barres (2) inséré dans le canal en creux (33).

5. Selon la revendication 4, l'ensemble d'appareillage / panneau de panneau **caractérisé en ce que** la pluralité de canaux évidés (33) répartis sur la surface arrière (30) du mode de réalisation principal (1) facilite la commutation de barres omnibus (33) à l'autre.

6. Selon la revendication 1, l'ensemble d'appareillage / panneau de panneau **caractérisé en ce que** le premier mode de réalisation principal (1) comporte au moins quatre trous de vis de montage (3) situés près des quatre coins du premier mode de réalisation principal.

7. Selon la revendication 1, l'ensemble d'appareillage / panneau de panneau **caractérisé en ce que** les rails de montage en forme de 'L' (5) comportent une pluralité de trous taraudés (6) d'un côté pour recevoir des vis de montage du mode de réalisation principal une pluralité de trous libres (7) de l'autre côté pour fixer les rails de montage aux éléments de cadre verticaux de l'ensemble d'appareillage / panneau de panneau.

8. Selon la revendication 1, l'ensemble d'appareillage / panneau de panneau **caractérisé en ce que** la surface arrière (30) du mode de réalisation principal (1) est biseautée aux deux bords de montage verticaux (32) pour avoir deux niveaux différents aux bords de montage) tandis que les surfaces avant (14) des deux bords de montage sont au même niveau de la surface avant (10) du mode de réalisation principal (1).

9. Selon la revendication 1, l'ensemble d'appareillage / panneau de panneau **caractérisé en ce qu'**une pluralité de trous de réception de vis autotaraudants (34) sont positionnés sur des distances égales dans des colonnes verticales et des rangées horizontales sur toute la surface arrière (30) du mode de réalisation principal 1) de sorte que deux colonnes adjacentes des trous de réception (34) se trouvent au milieu d'un canal en creux (33) à l'exception des deux canaux en creux (33) proches des bords verticaux gauche et droit du mode de réalisation principal.

10. Selon la revendication 1, l'ensemble d'appareillage est **caractérisé en ce que** la zone ouverte de chaque jeu de barres (2) installée dans les canaux en creux (33) est isolée individuellement par des couvercles en polycarbonate maintenus entre des modes de réalisation auxiliaires (50).

11. Selon la revendication 1, l'ensemble d'appareillage / panneau de panneau **caractérisé en ce que** la surface avant (10) du mode de réalisation principal (1) est une configuration d'un ensemble de trous d'enfichage (12) à angle interne, des trous de vis (16), une série de fentes borgnes rectangulaires (13) et des trous de vis de montage (3).

12. Selon la revendication 1, l'ensemble d'appareillage / panneau de panneau **caractérisé en ce qu'**une pluralité de trous d'enfichage (12) à angle interne sont positionnés sur la surface avant (10) avec une modularité de 25 mm verticalement et de 50 mm horizontalement et centrant les canaux évidés 33) sur la surface arrière (30) du mode de réalisation (1).

13. Selon la revendication 1, l'ensemble d'appareillage / tableau de commande est **caractérisé en ce que** les trous d'enfichage (12) à angle Interne sont répartis sur toute la surface avant (10) du mode de réalisation principal (1) sauf sur les deux bords de montage.

14. Selon la revendication 1, l'ensemble d'appareillage / panneau de distribution **caractérisé en ce que** les trous d'enfichage (12) présentent une structure de paroi à angle interne afin de guider les broches de prise de réception vers les barres de branchement central les trous d'obturation (12) dans les canaux évidés (33).

15. Selon la revendication 1, l'ensemble d'appareillage / panneau de panneau **caractérisé en ce que** la taille et la forme d'un trou d'obturation (12) sont déterminées de manière à empêcher l'insertion d'un objet d'une taille d'un doigt humain.

16. Selon la revendication 1, l'ensemble d'appareillage / panneau de panneau **caractérisé en ce que** les trous de vis autotaraudeurs (16) sont configurés sur la surface avant (10) à des distances verticales et horizontales égales pour être de nature modulaire, à l'exception des deux colonnes de des trous de vis autotaraudants (16) situés le long du centre des colonnes de trous d'obturation (12) à proximité des bords de montage gauche et droit (32).

17. Selon la revendication 1, l'ensemble d'appareillage / panneau de panneau **caractérisé en ce que** le mode de réalisation principal (1) est facilité par un ensemble de plaque d'obturation (20) comprenant deux plaques dont la plaque d'obturation supérieure (21) présente des découpes rectangulaires (23) de la taille des trous d'obturation (12), des saillies trapézoïdales (22) et des fentes de coulissement verticales (24), tandis que la plaque d'obturation inférieure (25) présente des creux trapézoïdaux (26) et des fentes de glissement horizontales (27).

18. Selon la revendication 17, l'ensemble d'appareillage / panneau de panneau **caractérisé en ce que** l'ensemble de plaque d'obturateur (20) dont la plaque d'obturation supérieure (21) recouvre les trous d'obturation (12) du mode de réalisation principal (1) position; se déplace vers le haut en ouvrant les trous d'obturation (12) lorsqu'une unité retirable / amovible est insérée et tombe vers le bas en fermant les trous d'obturation (12) lorsque l'unité retirable / amovible est retirée.

19. Selon la revendication 18, l'ensemble d'appareillage / panneau de distribution **caractérisé en ce que** l'ensemble de plaque d'obturateur (20) dont la hauteur de la plaque d'obturateur supérieure (21) est plus grande que la plaque d'obturateur inférieur la plaque d'obturation inférieure (25) est plus grande que la plaque d'obturation supérieure (21), de sorte que le poids de la plaque d'obturation supérieure (21) a été augmenté.

20. Selon la revendication 17, l'ensemble d'appareillage / panneau de panneau **caractérisé en ce que** l'ensemble de plaque d'obturateur (20) duquel la plaque d'obturateur supérieure (21) est montée sur la surface avant (10) du recouvrement principal les trous d'obturation (12) en position par défaut et de manière à pouvoir coulisser verticalement vers le haut et vers le bas à travers les fentes de coulissement verticales (24).

21. Selon la revendication 17, l'ensemble d'appareillage / panneau de panneau **caractérisé en ce que** l'ensemble de plaque d'obturateur (20) duquel la plaque d'obturateur inférieure (25) est montée sur la surface avant (10) du mode de réalisation principal une manière qui lui permet de coulisser horizontalement vers la gauche et vers la droite à travers les fentes de coulissement horizontales (27).

22. Selon la revendication 1, l'ensemble d'appareillage / panneau de panneau **caractérisé en ce que** le mode de réalisation principal (1) comprend une pluralité de clips mâles (8) en saillie sur son bord horizontal supérieur et une pluralité de clips femelles bord.

23. Selon la revendication 1, l'ensemble d'appareillage / panneau de panneau **caractérisé en ce que** le mode de réalisation auxiliaire (50) comporte des structures nervurées (51) sur ses surfaces rectangulaires plus larges, des creux rectangulaires (52) à intervalles réguliers sur une des surfaces étroites et une série de trous de vis (53) sur l'autre surface étroite opposée, de sorte que le mode de réalisation auxiliaire (50) attache des barres de bus insérées dans des canaux évidés (33) en serrant les vis autotaraudeuses sur la surface arrière (30) du mode de réalisation principal (1), inséré à travers lesdits trous de vis (53) sur le mode de réalisation auxiliaire (50).

24. Selon la revendication 23, l'ensemble d'appareillage / panneau de panneau **caractérisé en ce que** les creux rectangulaires (52) dans le mode de réalisation auxiliaire (50) ont la même largeur des canaux évidés (33) et la distance entre deux creux adjacents égal à la distance entre deux canaux en creux adjacents (33).

25. Selon la revendication 24, l'ensemble d'appareillage / panneau de distribution est **caractérisé en ce que** la profondeur d'une immersion rectangulaire (52) du mode de réalisation auxiliaire (50) est inférieure à la hauteur de la partie saillante du jeu de barres installée dans les canaux évidés 33).

26. Procédé pour recouvrir et découvrir des trous d'obturation (12) du mode de réalisation principal (1) de l'ensemble d'appareillage / panneau de panneau, tel que défini dans la revendication 1, comprenant les étapes consistant à:
a. La plaque de volet supérieur (21) recouvre les trous de fiche (12) dans sa position par défaut;
b. La plaque d'obturateur supérieure (21) est montée sur les trous d'obturation (12) dans une position par défaut et de manière à pouvoir coulisser verticalement vers le haut et vers le bas à travers les fentes de coulissement verticales (24);
c. La plaque d'obturation inférieure (25) est montée de manière à pouvoir coulisser horizontalement à gauche et à droite à travers les fentes de coulissement horizontales (27);
d. La plaque d'obturation inférieure (25) est déplacée vers sa droite en insérant un objet par l'Intermédiaire de la découpe de déclenchement (28) qui pousse la découpe de déclenchement (28) vers la droite, la plaque d'obturation supérieure (21) glissant vers le haut et ouvre les trous d'obturation (12);
e. Lorsque l'objet qui pousse la découpe de déclenchement (28) vers la droite est retiré de la découpe de déclenchement (28), la plaque de volet supérieur (21) commence à descendre simultanément en déplaçant la plaque de volet inférieur sa gauche, c'est-à-dire revenir à sa position par défaut en fermant les trous d'obturation (12) et
f. Lorsque l'objet qui pousse la découpe de déclenchement (28) vers la droite est entièrement libéré de la découpe de déclenchement (28), la plaque obturatrice supérieure (21) revient automatiquement à sa position par défaut et les trous de prise (12) sont complètement fermés.
